# FASCICULE DE BREVET EUROPEEN

(11) **EP 1 704 115 B1**
(45) Date de publication et mention de la délivrance du brevet: **01.11.2017**
(21) Numéro de dépôt: 04805022.3
(22) Date de dépôt: 23.12.2004
(51) Int. Cl.: C01B 25/28, C01B 25/30, C01B 25/32, C01B 25/40, C01B 25/41

(54) **PROCEDE DE PREPARATION DE PHOSPHATES DE BASES FORTES**
VERFAHREN ZUR HERSTELLUNG VON PHOSPHATEN STARKER BASEN
METHOD FOR PRODUCING STRONG BASE PHOSPHATES

(30) Priorité: 24.12.2003 BE 200300682
(43) Date de publication de la demande: 27.09.2006
(73) Titulaire: Ecophos, 1348 Louvain-la-Neuve (BE)
(72) Inventeur: TAKHIM, Mohamed, B-1348 Louvain-la-Neuve (BE)
(74) Mandataire: Mellet, Valérie Martine
(86) Numéro de dépôt international: PCT/EP2004/053695
(87) Numéro de publication internationale: WO 2005/066071

(56) Documents cités:
- EP-A- 0 205 708
- DE-A- 1 667 575
- FR-A- 1 347 183
- FR-A- 2 550 181
- US-A- 2 978 312
- DATABASE WPI Section Ch, Week 197147 Derwent Publications Ltd., London, GB; Class C04, AN 1971-75206S XP002295604 & JP 46 040534 B (NIPPON BUILDER KK) 30 novembre 1971 (1971-11-30)

## Description

La présente invention est relative à la préparation de phosphates de bases fortes.

On connaît d'une manière générale la préparation de phosphates de bases fortes par réaction d'acide phosphorique purifié avec celles-ci.

Par bases fortes, on entend dans la présente invention, une base capable d'augmenter le pH dans un milieu de dihydrogénophosphate de calcium (MCP) en solution aqueuse, par exemple de l'oxyde, de l'hydroxyde ou des sels solubles dans l'eau de sodium, de potassium ou d'ammonium.

On connaît aussi un procédé de préparation de phosphates de bases fortes, comprenant
- une formation d'une pulpe constituée d'une phase aqueuse contenant du phosphate de calcium soluble dans l'eau sous forme d'ions calcium et d'ions phosphate, et d'une phase solide contenant des impuretés,
- une séparation entre ladite phase liquide et ladite phase solide,
- dans la phase liquide issue de ladite séparation, un déplacement des ions calcium par des ions d'une base forte, avec formation d'une solution aqueuse de phosphate(s) de ladite base forte et précipitation d'un phosphate de calcium insoluble dans l'eau, et
- un isolement du phosphate de calcium précipité à partir de la solution aqueuse de phosphate(s) de base forte
(voir DE-A-1667575). Ce procédé nécessite une attaque de minerai par de l'acide phosphorique concentré en excès dans des conditions de cristallisation du dihydrogénophosphate de calcium (MCP) et de dissolution des impuretés dans la phase liquide, puis une redissolution des cristaux de MCP, ce qui en fait un procédé complexe et coûteux.

Par ailleurs, on connaît des procédés de production d'acide phosphorique pur par attaque du minerai à l'acide phosphorique (voir par exemple FR-A-2343696, US-A-3.323.864, FR-A-1082404, et EP-A-0087323). Ces procédés font intervenir, après cette attaque et une éventuelle séparation solide/liquide, une précipitation d'un sel de calcium par l'intermédiaire d'un acide, de façon à obtenir de l'acide phosphorique de bonne qualité. Dans certains de ces procédés, le sel de calcium précipité contient encore les impuretés d'origine du minerai, dans d'autres on fait usage d'acide chlorhydrique, fluorhydrique ou fluosilicique, qui sont des acides coûteux, dont la manipulation est dangereuse.

On connaît encore un procédé de production d'acide phosphorique par attaque de minerai à l'acide phosphorique (v. WO-A-02/12120). Dans ce procédé la solution de phosphate de calcium issue de la séparation solide/liquide de la pulpe résultant de l'attaque phosphorique est soumise à un traitement à l'acide chlorhydrique de manière à isoler, d'une part, une solution aqueuse de chlorure de calcium et, d'autre part, de l'acide phosphorique pur.

La présente invention a pour but de fabriquer des phosphates de bases fortes de qualité supérieure d'une manière simple, efficace et peu coûteuse.

Pour résoudre ces problèmes, on a prévu suivant l'invention un procédé tel qu'indiqué ci-dessus, dans lequel l'étape de formation de ladite pulpe comprend
- un mélange de minerai de phosphate et d'acide phosphorique d'attaque, de façon à obtenir une composition pâteuse de triple super-phosphate (TSP), et
- une addition d'eau à la composition de TSP obtenue.

On part donc dans ce procédé de produits phosphatés à peu de valeur ajoutée. Parmi les produits phosphatés à faible valeur ajoutée on peut citer en effet le minerai de phosphate et les produits résultant d'une simple attaque de ce minerai par un acide phosphorique par exemple brut, comme la composition pâteuse précitée ou le produit de séchage de celle-ci qui est utilisé en particulier comme engrais. Tous ces produits contiennent généralement encore les impuretés présentes non seulement dans le minerai, mais aussi dans l'acide d'attaque brut, ce qui explique leur usage limité à celui d'engrais. Etant donné le traitement simple auquel les matières premières ont été soumises pour les obtenir, ces produits sont aussi d'un coût relativement faible.

Pour obtenir la pulpe susdite, on peut donc procéder à une attaque usuelle du minerai de phosphate par de l'acide phosphorique. On connaît par exemple un tel procédé d'attaque phosphorique pour produire des engrais à base de phosphate. On laisse le produit de l'attaque mûrir, et puis simplement sécher. Après granulation éventuelle il est utilisé sous forme d'un phosphate de calcium non épuré, c'est-à-dire non débarrassé des impuretés du minerai et de l'acide phosphorique brut utilisé pour l'attaque. Cet engrais, qui est principalement constitué de triple super-phosphate de calcium (TSP), s'appelle aussi engrais simple.

Un tel procédé de fabrication de TSP est par exemple décrit dans Wesenberg, Manufacturing Concentrated Superphosphate, in Manual of Fertilizer Processing, Marcel Drekker Inc., p. 488-514, 1987.

La pulpe suivant l'invention est alors obtenue par dissolution dans l'eau de la composition pâteuse précitée directement après la formation de celle-ci. On peut aussi utiliser du TSP séché, éventuellement granulé, et le dissoudre dans de l'eau pour obtenir une pulpe adéquate.

Dans l'étape de formation du procédé suivant l'invention, la pulpe présente avantageusement un pH de 1,2 à 3,2, de préférence de 2 à 3, en particulier de 2,5, et le rapport molaire Ca/P est maintenu avantageusement à une valeur de l'ordre de 0,4 à 0,6, de préférence de 0,45. A ce pH élevé, et de préférence à température et pression ambiantes, les impuretés formées en particulier de Fe, Si, U, Cd, As, F, etc. ne sont que peu dissoutes, tandis que l'ion Ca⁺⁺, dont la teneur est relativement importante dans la pulpe (jusqu'à 16 % en poids), se présente en solution. Le phosphate de calcium formé se trouve en effet sous une forme soluble dans l'eau, en particulier de dihydrogénophosphate de calcium (MCP).

L'étape de séparation solide/liquide peut s'effectuer par tout moyen approprié connu, par exemple par filtration, décantation ou encore comme décrit dans la WO-A-02/12120. Le déplacement précité peut ainsi être effectué dans une phase liquide très propre, dépourvue de manière maximale d'impuretés.

Pendant l'étape de déplacement par une base forte, on observe évidemment une montée rapide du pH. Il résulte de cette introduction d'une base forte dans la solution de dihydrogénophosphate de calcium (MCP), d'une part, un déplacement des ions Ca⁺⁺ par des ions de la base forte utilisée et formation ainsi du phosphate de la base forte qui est très pur et soluble dans l'eau, et, d'autre part, une précipitation simultanée de monohydrogénophosphate de calcium (DCP) pur.

La quantité de base forte ajoutée pour le déplacement est déterminée par le produit que l'on souhaite obtenir. Par exemple on peut avantageusement prévoir d'ajouter dans la phase liquide issue de ladite séparation Na₂CO₃ et/ou NaOH de façon à obtenir un rapport molaire Na/P qui soit approximativement de l'ordre de 1 à 3, de préférence de 1,67 pour l'obtention de STPP. On obtient ainsi, dans ce cas, dans la solution aqueuse isolée, après la précipitation du DCP, un rapport molaire entre monohydrogénophosphate et dihydrogénophosphate de sodium de l'ordre de 2/1.

L'isolement des deux phases formées se fait d'une manière quelconque, connue en soi, par exemple par décantation, filtration, ou un processus analogue.

Les solutions aqueuses de bases fortes peuvent alors être traitées de manière connue pour former des poudres, comprimés, ou solutions concentrées de monophosphates, diphosphates ou polyphosphates de sodium, de potassium ou encore d'ammonium, et en particulier du tripolyphosphate de sodium (STPP). Ces phosphates sont de qualité technique et peuvent être utilisés entre autres dans le domaine des détergents, du traitement des surfaces métalliques et de la formulation d'engrais liquide, par exemple.

Le DCP pur obtenu est un produit que l'on peut valoriser par exemple dans l'alimentation animale.

D'autres modes de réalisation avantageux du procédé suivant l'invention sont indiqués dans les revendications annexées.

L'invention va à présent être décrite de manière plus détaillée à l'aide d'exemples de réalisation non limitatifs.

### Exemple 1

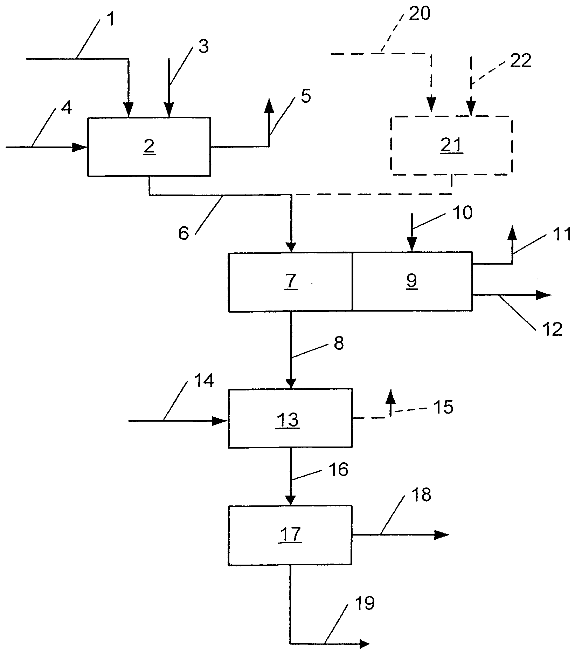

On peut prévoir un mode de réalisation de l'invention dans une installation telle qu'illustrée sur la figure unique annexée.

Un minerai de phosphate (100 g) est alimenté en 1 dans un réacteur 2 dans lequel, on introduit en 4 un liquide d'attaque contenant des ions phosphates, tel que du H₃PO₄ brut (190 g) (appelé aussi WPPA).

Le minerai de phosphate est de préférence broyé et il présente avantageusement une teneur en P₂O₅ de l'ordre de 28-30 % en poids, tandis que l'acide phosphorique brut présente une teneur en P₂O₅ de l'ordre de 30-40 % en poids.

Les conditions de digestion sont établies de manière à éviter toute précipitation de phosphate de calcium.

La digestion s'effectue avantageusement à la température et à la pression ambiantes. On peut évidemment prévoir une température plus élevée, allant jusqu'à 80°C par exemple.

Après formation d'une composition pâteuse présentant une teneur en P₂O₅ de 30-35 % en poids, on introduit progressivement dans le réacteur 2, en 3, de l'eau (190 g).

Un conduit 5 permet d'évacuer du gaz CO₂ (5 g) par le sommet du réacteur.

Après digestion dans le premier réacteur 2, la pulpe formée est transférée par le conduit 6 dans un dispositif de décantation-filtration 7 dans lequel a lieu une séparation entre une phase liquide (380 g) évacuée par le conduit 8 et une phase solide qui est, dans le dispositif de lavage 9, soumise à un lavage par de l'eau (190 g) introduite en 10.

Dans le dispositif de décantation-filtration 7 le pH est en particulier de 2-3. A ce pH élevé, la plupart des métaux formant les impuretés précipitent à l'exception du calcium qui reste en solution aqueuse sous la forme de dihydrogénophosphate de calcium (MCP). L'eau de lavage (190 g) du gâteau de filtration est évacuée du dispositif de lavage 9 par le conduit 11 et elle peut éventuellement être recyclée dans l'eau alimentée en 3 dans le réacteur 2. Les impuretés (100 g) sont évacuées en 12 sous la forme d'un concentré solide.

La solution de MCP (380 g) est transférée par le conduit 8 à un dispositif de précipitation 13, dans lequel on introduit, en 14, une base forte (47 g), par exemple du carbonate de sodium Na₂CO₃.

L'augmentation brusque du pH, à une valeur de 4,5 à 7, de préférence de 5 à 6,5, avantageusement de 6, a pour effet une précipitation de monohydrogénophosphate de calcium insoluble (DCP) dans l'eau, un dégagement de CO₂ (19 g) en 15, et un déplacement des ions Ca⁺⁺ par des ions Na⁺ dans la solution aqueuse. La suspension obtenue est dirigée par le conduit 16 à un dispositif de filtration 17. Un gâteau de filtration formé de DCP (150 g) est évacué en 18 et le filtrat obtenu en 19 (258 g) contient en solution des phosphates de Na purs par exemple dans un rapport molaire Na₂HPO₄/NaH₂PO₄ de 2/1. Cette solution présente un rapport molaire Na/P de 5/3 (Na/P = 1,67).

Au lieu d'utiliser une pulpe résultant d'une attaque phosphorique de minerai de phosphate, on peut aussi prévoir de diluer dans de l'eau un engrais simple (TSP) disponible dans le commerce. A cet effet on introduit cet engrais en 20 dans une cuve 21 dans laquelle de l'eau est admise en 22. Les conditions sont respectées pour que le TSP se dissolve tandis que les impuretés qu'il contient habituellement restent sous forme de particules solides en suspension. Cette suspension peut alors être alimentée au dispositif de décantation-filtration 7 et subir le même traitement que celui décrit ci-dessus.

Il doit être entendu que la présente invention n'est en aucune façon limitée aux modes de réalisation décrits ci-dessus et qu'elle peut être modifiée dans le cadre des revendications annexées.

## Revendications

1. Procédé de préparation de phosphates de bases fortes, comprenant
- une formation d'une pulpe constituée d'une phase aqueuse contenant du phosphate de calcium soluble dans l'eau sous forme d'ions calcium et d'ions phosphate, et d'une phase solide contenant des impuretés,
- une séparation entre ladite phase liquide et ladite phase solide,
- dans la phase liquide issue de ladite séparation, un déplacement des ions calcium par des ions d'une base forte, avec formation d'une solution aqueuse de phosphate(s) de ladite base forte et précipitation d'un phosphate de calcium insoluble dans l'eau, et
- un isolement du phosphate de calcium précipité à partir de la solution aqueuse de phosphate(s) de base forte,
**caractérisé en ce que** l'étape de formation de ladite pulpe comprend
- un mélange de minerai de phosphate et d'acide phosphorique d'attaque, de façon à obtenir une composition pâteuse de triple super-phosphate (TSP), et
- une addition d'eau à la composition de TSP obtenue.

2. Procédé suivant la revendication 1, **caractérisé en ce que** ladite étape de formation comprend un séchage de la composition de TSP et éventuellement son stockage, entre l'étape susdite de mélange et celle d'addition d'eau.

3. Procédé suivant l'une ou l'autre des revendications 1 et 2, **caractérisé en ce que** l'acide phosphorique d'attaque présente une teneur en P₂O₅ comprise entre 30 % et 50 % en poids, de préférence entre 35 et 40 % en poids.

4. Procédé suivant l'une quelconque des revendications 1 à 3, **caractérisé en ce que** la pulpe de l'étape de formation présente un pH de 1,2 à 3,2, de préférence de 2 à 3, avantageusement de 2,5.

5. Procédé suivant l'une quelconque des revendications 1 à 4, **caractérisé en ce que**, dans ladite pulpe, le rapport molaire Ca/P est de l'ordre de 0,4 à 0,6, de préférence de 0,45.

6. Procédé suivant l'une quelconque des revendications 1 à 5, **caractérisé en ce qu'**il a lieu à température et à pression ambiantes.

7. Procédé suivant l'une quelconque des revendications 1 à 6, **caractérisé en ce que** lesdits ions de base forte sont des ions sodium, potassium et/ou ammonium.

8. Procédé suivant l'une quelconque des revendications 1 à 7, **caractérisé en ce que** le phosphate soluble dans l'eau est sous la forme de dihydrogénophosphate de calcium (MCP) et **en ce que** le phosphate de calcium insoluble dans l'eau est sous la forme de monohydrogénophosphate de calcium (DCP).

9. Procédé suivant l'une quelconque des revendications 1 à 8, **caractérisé en ce que**, lors du déplacement dans la phase liquide issue de ladite séparation, celle-ci présente un pH de 4,5 à 7, de préférence de 5 à 6,5, avantageusement de 6.

10. Procédé suivant l'une quelconque des revendications 1 à 9, **caractérisé en ce que**, pour obtenir ledit déplacement, on ajoute dans la phase liquide issue de ladite séparation Na₂CO₃ et/ou NaOH en une quantité telle que le rapport molaire Na/P est de l'ordre de 1 à 3, de préférence de l'ordre de 1,67.

11. Procédé suivant la revendication 10, **caractérisé en ce que** la solution aqueuse de base forte présente un rapport molaire entre monohydrogénophosphate de sodium et dihydrogénophosphate de sodium de l'ordre de 2/1.

12. Procédé suivant l'une quelconque des revendications 1 à 11, **caractérisé en ce que** l'acide phosphorique d'attaque est de l'acide phosphorique appelé WPPA.

## Patentansprüche

1. Zubereitungsverfahren von Phosphaten aus starken Basen, umfassend:
- eine Bildung einer Pulpe, die sich aus einer wässrigen Phase, die in Wasser lösliches Kalziumphosphat in Form von Kalziumionen und Phosphationen enthält, und einer festen Phase, die Unreinheiten enthält, zusammensetzt,
- eine Trennung zwischen der genannten flüssigen Phase und der genannten festen Phase,
- in der aus der genannten Trennung stammenden flüssigen Phase eine Verschiebung der Kalziumionen durch Ionen aus einer starken Base mit Bildung einer wässrigen Phosphatlösung aus der genannten starken Base und Fällung eines in Wasser löslichen Kalziumphosphats und
- eine Isolation des gefällten Kalziumphosphats ausgehend von der wässrigen Phosphatlösung aus starker Base,
**dadurch gekennzeichnet, dass** der Bildungsschritt der genannten Pulpe umfasst
- eine Mineralienmischung aus Phosphat und Ätz-Phosphorsäure derart, dass eine pastenartige Zusammensetzung aus dreifachem Superphosphat (TSP) erhalten wird, und
- ein Zufügen von Wasser zu der erhaltenen Zusammensetzung aus TSP.

2. Verfahren gemäß Anspruch 1, **dadurch gekennzeichnet, dass** der genannte Bildungsschritt ein Trocknen der Zusammensetzung aus TSP und eventuell dessen Lagerung zwischen dem o. g. Mischungsschritt und dem Zufügungsschritt des Wassers umfasst.

3. Verfahren gemäß dem einen oder dem anderen der Ansprüche 1 und 2, **dadurch gekennzeichnet, dass** die Ätz-Phosphorsäure einen zwischen 30 Gew.-% und 50 Gew.-%, bevorzugt zwischen 35 und 40 Gew.-% inbegriffenen Gehalt an P₂O₅ aufweist.

4. Verfahren gemäß irgendeinem der Ansprüche 1 bis 3, **dadurch gekennzeichnet, dass** die Pulpe des Bildungsschritts einen ph von 1,2 bis 3,2, bevorzugt von 2 bis 3, vorteilhaft von 2,5 aufweist.

5. Verfahren gemäß irgendeinem der Ansprüche 1 bis 4, **dadurch gekennzeichnet, dass** in der genannten Pulpe das Stoffmengenverhältnis Ca/P in der Größenordnung von 0,4 bis 0,6, bevorzugt von 0,45 liegt.

6. Verfahren gemäß irgendeinem der Ansprüche 1 bis 5, **dadurch gekennzeichnet, dass** es bei Raumtemperatur und -druck erfolgt.

7. Verfahren gemäß irgendeinem der Ansprüche 1 bis 6, **dadurch gekennzeichnet, dass** die genannten Ionen aus starker Base Natrium-, Kalium-, und / oder Ammoniumionen sind.

8. Verfahren gemäß irgendeinem der Ansprüche 1 bis 7, **dadurch gekennzeichnet, dass** das in Wasser lösliche Phosphat in Form von Kalzium-Dihydrogenophosphat (MCP) vorhanden ist und dass das in Wasser unlösliche Kalziumphosphat in Form von Kalzium-Monohydrogenophosphat (DCP) vorhanden ist.

9. Verfahren gemäß irgendeinem der Ansprüche 1 bis 8, **dadurch gekennzeichnet, dass** die genannte Trennung bei der Verschiebung in die aus derselben stammende flüssige Phase einen ph von 4,5 bis 7, bevorzugt von 5 bis 6,5, vorteilhaft von 6 aufweist.

10. Verfahren gemäß irgendeinem der Ansprüche 1 bis 9, **dadurch gekennzeichnet, dass** für den Erhalt der genannten Verschiebung in die aus der genannten Trennung stammende Phase Na₂CO₃ und / oder NaOH in einer derartigen Menge zugefügt wird / werden, dass das Stoffmengenverhältnis Na/P die Größenordnung von 1 bis 3, bevorzugt in der Größenordnung von 1,67 aufweist.

11. Verfahren gemäß Anspruch 10, **dadurch gekennzeichnet, dass** die wässrige Lösung aus starker Base ein Stoffmengenverhältnis zwischen Natrium-Monohydrogenophosphat und Natrium-Dihydrogenophosphat in einer Größenordnung von 2/1 aufweist.

12. Verfahren gemäß irgendeinem der Ansprüche 1 bis 11, **dadurch gekennzeichnet, dass** die Ätz-Phosphorsäure eine als WPPA bezeichnete Phosphorsäure ist.

## Claims

1. The process for preparing strong base phosphates, comprising
- forming a pulp made up of an aqueous phase containing water-soluble calcium phosphate in the form of calcium ions and phosphate ions, and a solid phase containing impurities,
- a separation between the said liquid phase and the said solid phase,
- in the liquid phase resulting from the said separation, a displacement of calcium ions by strong base ions results in the formation of an aqueous solution of phosphate(s) of the said strong base and precipitation of a water-insoluble calcium phosphate, and
- isolating the precipitated calcium phosphate from the aqueous solution of strong base phosphate(s),
**characterised in that** the forming step of the said pulp comprises
- mixing of phosphate ore and phosphoric acid for etching, in order to obtain a pasty composition of triple super-phosphate (TSP), and
- adding water to the TSP composition obtained.

2. Process according to claim 1, **characterised in that** the said forming step includes drying the TSP composition and possibly storing it, between the said mixing step and the water addition step.

3. Process according to either of claims 1 and 2, **characterised in that** phosphoric acid for etching contains P₂O₅ between 30% and 50% by weight, preferably between 35 and 40% by weight.

4. Process according to any one of claims 1 to 3, **characterised in that** the pulp of the forming step has a pH of 1.2 to 3.2, preferably 2 to 3, however with 2.5 being the preferred value.

5. Process according to any one of claims 1 to 4, **characterised in that**, in the said pulp, the Ca/P molar ratio is approximately 0.4 to 0.6, preferably 0.45.

6. Process according to any one of claims 1 to 5, **characterised in that** it takes place at ambient temperature and pressure.

7. Process according to any one of claims 1 to 6, **characterised in that** the said strong base ions are sodium, potassium and/or ammonium ions.

8. Process according to any one of claims 1 to 7, **characterised in that** the water-soluble phosphate is in the form of monocalcium phosphate (MCP) and **in that** the water-insoluble calcium phosphate is in the form of dicalcium phosphate (DCP).

9. Process according to any one of claims 1 to 8, **characterised in that**, during displacement in the liquid phase resulting from the said separation, it has a pH of 4.5 to 7, preferably 5 to 6.5, however with 6 being the preferred value.

10. Process according to any one of claims 1 to 9, **characterised in that**, in order to obtain the said displacement, Na₂CO₃ and/or NaOH is added to the liquid phase resulting from the said separation in a quantity such that the Na/P molar ratio is approximately 1 to 3, preferably 1.67.

11. Process according to claim 10, **characterised in that**, the strong base aqueous solution has a molar ratio between dicalcium phosphate and monocalcium phosphate of approximately 2/1.

12. Process according to any one of claims 1 to 11, **characterised in that** the phosphoric acid for etching is the phosphoric acid known as WPPA.
